# EUROPEAN PATENT SPECIFICATION

(11) **EP 1 295 477 B1**
(45) Date of publication and mention of the grant of the patent: **19.01.2011**
(21) Application number: 01936442.1
(22) Date of filing: 07.06.2001
(51) Int. Cl.: H04N 7/18

(54) **DYNAMIC CAMERA ADDRESSING METHOD AND SYSTEM**
DYNAMISCHES KAMERASTEUERUNGSSYSTEM UND VERFAHREN
SYSTEME ET PROCEDE D'ADRESSAGE DYNAMIQUE DE CAMERAS

(30) Priority: 16.06.2000 US 212002 P; 26.10.2000 US 697378
(43) Date of publication of application: 26.03.2003
(73) Proprietor: ROBERT BOSCH GMBH, 70469 Stuttgart (DE)
(72) Inventor: MILLER, Matthew, NL-5656 AA Eindhoven (NL); TAYLOR, Matthew, NL-5656 AA Eindhoven (NL)
(74) Representative: Bee, Joachim
(86) International application number: PCT/EP2001/006450
(87) International publication number: WO 2001/097523

(56) References cited:
- EP-A- 0 893 919
- US-A- 6 104 428
- LOUCKS E.M. ET AL: 'IMPLEMENTATION OF A DYNAMIC ADDRESS ASSIGNMENT PROTOCOL IN A LOCAL AREA NETWORK' COMPUTER NETWORKS AND ISDN SYSTEMS, NORTH HOLLAND PUBLISHING. AMSTERDAM, NL vol. 11, no. 2, 01 February 1986, pages 133 - 146, XP000211676 ISSN: 0169-7552
- CHANG E. C.-P.: 'Internet based remote camera control system' PROCEEDINGS OF THE INTELLIGENT VEHICLES SYMPOSIUM 19 September 1996, pages 126 - 129, XP002174273
- Droms R.: "Dynamic Host Configuration Protocol" Network Working Group March 1997 (1997-03), Brucknell University Retrieved from the Internet: URL:http://www.ietf.org/rfc/rfc2131.txt

## Description

### Background of the Invention

The present invention generally relates to surveillance systems, and more particularly to a method for dynamically addressing surveillance cameras.

A typical surveillance system may include anywhere from one to four thousand cameras and a controller or controlling system. The cameras in the system are placed in various locations to collect video. Further, the controller usually includes at least one display device and a keyboard. The display device is used to display the video collected by the cameras, which enables the various locations of the cameras to be monitored.

The controller is utilized to send commands to the cameras and/or video switcher, which are entered by an operator or installer via the keyboard. These commands include selecting video from/to one of the cameras to be displayed. Further, these commands also include control commands such as panning, tilting, zooming and camera set-up commands.

In the typical surveillance system, each of the cameras receive all of the control commands sent by the controller. In order to identify which camera should receive a particular command, each of the cameras is assigned a unique operational address. Therefore, a camera will only respond to a command that includes its unique address.

In order to assign the operational address, each of the cameras includes a number of switches. Every time an address needs to be set or changed, the operator or installer must go to the physical location of camera, which is usually remote from where the controller is located. This is often difficult and time consuming since a typical surveillance system may include up to four thousand cameras. Further, since the cameras are often placed in hard to reach places such as in a ceiling, on a roof or pole, the installer must use ladders and/or expensive bucket trucks.

### Summary of the Invention

The present invention is directed to a method for addressing a camera in a surveillance system. The method includes

Document EP 0893919 discloses a camera server including a video transmitting part for transmitting a video signal of a video camera to each of a plurality of camera clients in response to their request to acquire the control right of the video camera and their requests to transmit video information of the video cameras, a permission command issuing part for issuing a command to permit control of the video camera in response to the request to acquire the control right of the video camera, and an automatic control part for executing automatic control of the video camera if the command to permit control of the video camera is not issued.

Document US 6104428, probably representing the closest prior art, discloses an addressable video camera having an ability to be assigned an address, that allows a security monitoring system utilizing a plurality of such addressable video cameras to be connected to the security guard room via a single cable.

selecting the camera to be addressed. Also, initiating the addressing mode. Further, displaying identifiers associated with cameras of the system and then entering the identifier associated with the camera selected.

The present invention is also directed to a surveillance system including a number of cameras and a controller. According to the present invention, each of the cameras have an identifier and an addressing mode. Further, the controller performs selecting the camera to be addressed. Also, initiating the addressing mode. Further, displaying identifiers associated with cameras of the system and then entering the identifier associated with the camera selected.

The camera includes a memory for storing an identifier.

An on screen display circuit is also included for overlaying the identifier on video collected from the camera in response to an addressing mode being initiated. The camera also includes a receiver/driver for transmitting the video including the identifier to a controlling device. Further, an operational address is either stored or cleared in the memory of the camera in response to the identifier being received from the controlling device.

### Brief Description of the Drawings

Referring now to the drawings where like reference numbers represent corresponding parts throughout.
Figure 1 is a block diagram of a system according to the present invention;
Figure 2 is a block diagram of a camera according to the present invention;
Figure 3 is a flow diagram for implementing the dynamic addressing mode according to the present invention; and
Figure 4-7 are examples of keyboard commands to implement the present invention.

### Detailed Description

The present invention is directed to a method and system for dynamically addressing surveillance cameras. As described in the prior art section, in order to set or change the operating address of a security camera, an operator or installer would have to go to the physical location of the camera to configure switches on the camera. This is often difficult and expensive since a system can include a large number of cameras that arc often placed in hard to reach places.

However, dynamically addressing cameras according to the present invention, allows the installer or operator to set the operating address remotely from the controller location such as a "Security Room". Further, addressing the camera remotely will save both time and money since the installer will no longer have to visit the camera site to set or change the operating address, which eliminates the need for ladders and/or expensive bucket trucks.

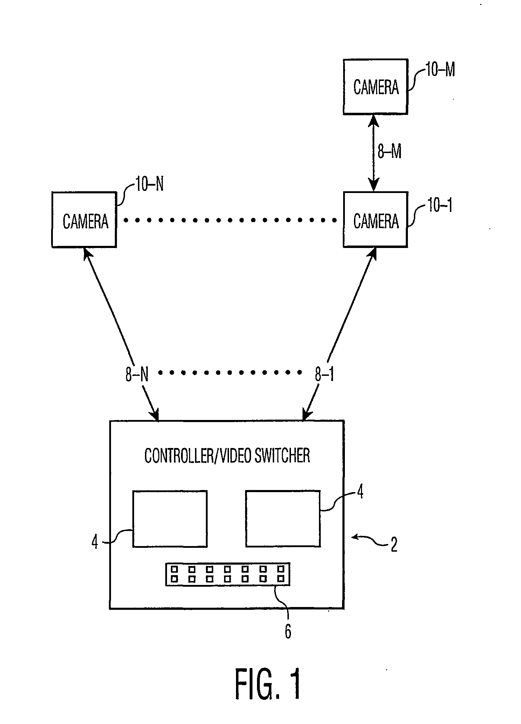

One example of a system according to the present invention is shown in Figure 1. As can be seen, the system includes a controller/video switcher 2 and a number of cameras 10. An example of a suitable camera is the AUTODOME camera made by Philips Electronics, the assignee herein. An example of a suitable controller is the ALLEGIANT Matrix matrix switcher and/or SYSTEM4 video multiplexer also made by Philips Electronics, the assignee herein.

The number of cameras 10 in the system can vary from one to four thousand. Further, each of the cameras 10 are coupled to the controller 2 by data lines 8. Each of the cameras may have its own physical data input or connection to the controller 2 or be placed in a daisy chain configuration. The number of each physical video input to the controller 2 is what is known as the physical address of the camera.

As can be further seen, the cameras 10 can be configured in a number of configurations. For example, each of the cameras 10-1 to 10-N are coupled in a separate parallel configuration, the cameras 10-1 to 10-M are coupled in a daisy chain configuration, or any combination thereof. It should be further noted that each of the cameras 10 may be placed in a location remote from the controller 2 such as a ceiling, roof or pole.

The controller 2 includes a number of devices such as one or more displays 4 and a keyboard 6 for entering commands. The controller 2 may also include a video recorder, which is not shown.

The controller 2 also includes a processor and memory for performing various functions and executing commands input by an operator via the keyboard 6. These commands include selecting video from one of the cameras to be displayed. In order to select a camera, the operator may type in the physical address of the camera.

During operation, the controller 2 controls the cameras 10 by sending control commands. The control commands include panning, tilting, zooming and camera set-up commands. In order to indicate which camera 10 should respond to a particular control command, the controller 2 sends an address with each control command. The address is necessary since each of the cameras 10 receive all of the commands sent by the controller 2.

As described in the prior art section, the controller 2 sends an operational address which is set or cleared by switches located on the camera 10. However, the controller 2 alternatively sends an operational address that is capable of being dynamically set or cleared according to the present invention.

According to the present invention, each of the cameras 10 include a dynamic addressing mode that will enable the operational address of each camera to be dynamically set or changed remotely from the controller 2. Further, the dynamic addressing mode may be initiated by the controller 2. An example of a method for implementing the dynamic addressing mode will be described in detail below.

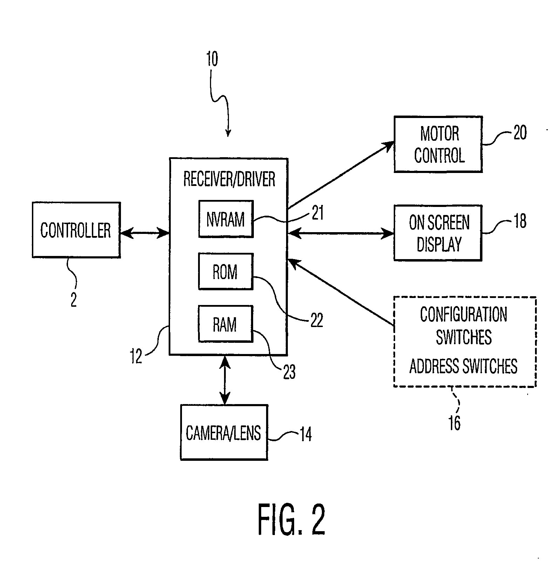

One Example of a camera according to the present invention is shown in Figure 2. As can be seen, the camera 10 includes a receiver/driver 12. The receiver/driver 12 includes a non-volatile random access memory (NVRAM) 21, a read only memory (ROM) 22 and a random access memory (RAM) 23. The ROM 22 is utilized to store permanent information such as program instructions to perform various functions within the camera 10. Further, the ROM 22 is also used to store a unique identifier for the camera 10. The RAM 23 is utilized to store temporary information such as commands from the controller 2. Further, the NVRAM 21 is used to store user settings as well as the operating address assigned to the camera 10.

The camera 10 also includes acamera/lens assembly 14, an on screen display integrated circuit 18 and a motor control 20. The receiver/driver 12 acts as the main interface between these elements and the controller 2. In particular, the receiver/driver 12 will process commands from the controller 2 to control the other elements. Further, the receiver/driver 12 will pass the video supplied by the camera back to the controller 2.

The camera/lens assembly 14 includes the optical elements and electrical components that convert images into an electrical video signal. Parameters such as zoom, focus and iris positions as well as set up values are adjusted in response to commands from the receiver/driver 12.

The on screen display integrated circuit 18 is used to overlay messages on the video being sent back to the controller 2. The motor control 20 controls the pan and tilt motors of the camera 10 in response to commands from the receiver/driver 12.

In some configurations, the camera 10 will also include configuration switches 16. As described in the prior art section, these switches 16 are used to assign the operational address of the camera 10. However, according to the present invention, the configuration switches 16 are only used before the operational address is set dynamically in the camera 10. If the operational address is set dynamically, the address set by the configuration switches 16 will be ignored.

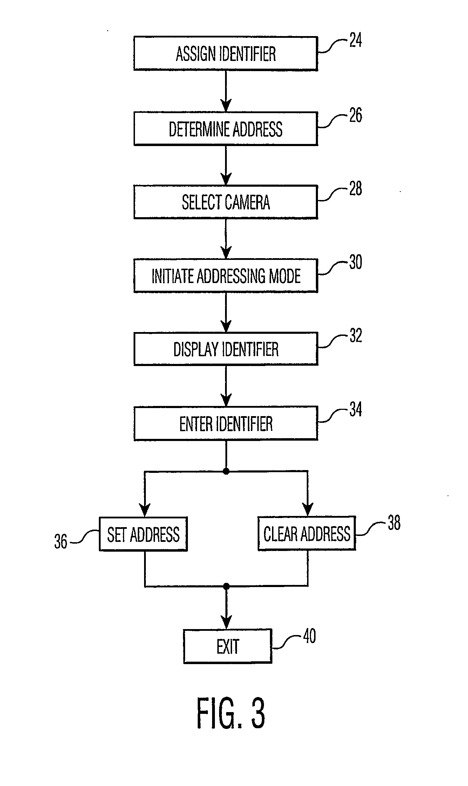

An example of a method for implementing the dynamic addressing mode according to the present invention is shown in Figure 3. The method utilizes a unique identifier assigned to each camera. By a series of on-screen displays, the user will be instructed to enter commands that are based on the unique identifier. The final step in the sequence is to enter an address that is utilized similar to the operational address.

In step 24, each camera will be assigned a unique identifier stored in a non-volatile memory. This identifier can be a serial number 'burned' into the ROM 22 of the receiver/driver 12 of Figure 2. This 'serialization' is accomplished in the chip's programmer process. The unique serial number will then be used to designate the particular camera for the dynamic addressing mode.

In step 26, an address is determined for the camera in the dynamic addressing mode. In order to determine this address, the installer figures what the logical camera number should be. The logical camera number is usually the same as the physical address of the camera. However, in large installations with multiple controllers, the logical camera number may differ from the physical address. In this case, the controllers must contain the proper camera table.

In step 28, the camera to be addressed is selected. A camera can be selected by entering its corresponding logical camera number. In response to entering the logical camera number, the video from the camera selected will be displayed by the controller 2.

In step 30, the dynamic addressing mode of the camera is initiated. The dynamic mode can be initiated by sending a signal to the cameras in the system. In response, all the cameras in the system that do not have its address set begin an addressing sequence. If a camera in the system has a previously programmed address that matches the physical address of the camera selected in step 28, this camera will also start the addressing process. This will be the case when it is necessary to change the address of a camera.

In response to initiating the dynamic addressing mode 30, each of the cameras that require addressing would then send video including its unique identifier back to the controller. Referring back to Figure 2, this is accomplished by the on screen display integrated circuit 18 of each camera 10 overlaying its corresponding identifier on the video being collected. The receiver/driver 12 of each camera then transmits the video with the corresponding identifier back to the controller 2 to be displayed. This enables the identifier from each of the cameras to be displayed by the controller in step 32.

In step 34, the identifier of the camera to be addressed is entered via the controller. The controller then transmits a command including the identifier of the camera to be addressed. Thus, the identifier is used in the command sequence to place the camera into the state to receive the new operational address. In one configuration, the identifier may be a unique serial number. Since some keyboards have only a three digit display, commands up to 999 are accessible. Therefore, the cameras will require the serial number to be entered in two consecutive commands.

As can be seen from Figure 3, after entering the identifier of the camera to be addressed in step 34, the method has a choice of two paths. If it is desired to assign a new address to the camera selected, the method will advance to step 36. to set the address. Referring back to Figure 2, step 36 is performed by storing the address determined in step 26 in the NVRAM 24. After performing step 36, the method will advance to exit 40.

After step 34, if it is desired to reset or clear the address of the camera selected, the method will advance to step 38 to clear the address. Referring back to Figure 2, step 38 is performed by erasing the previously stored address from the NVRAM 21. After step 38, the method will advance to exit 40.

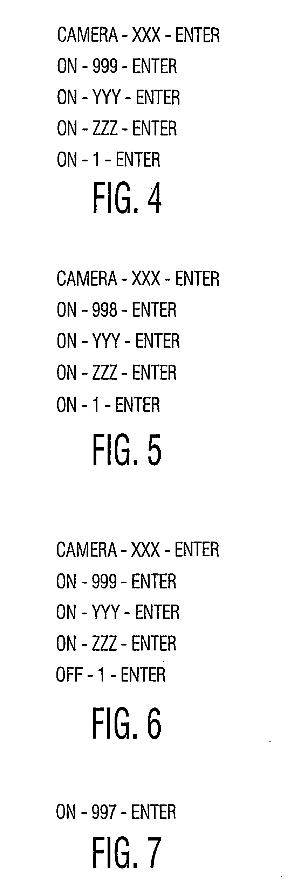

An example of keyboard commands to implement the present invention is shown in Figure 4. The command "CAMERA - XXX - ENTER" selects the camera to be addressed. If XXX=301, the camera with logical address "301" will have its video switched to a display of the controller.

The command "ON - 999 - ENTER" initiates the dynamic addressing mode. In response to this command, the on-screen display of every camera on the communications line that requires addressing would show its unique serial number. At this point, since the installer is monitoring the camera that he wishes to address, a message instructing the installer to use the "ON - YYY - ENTER" command to continue the dynamic addressing mode is displayed.

It should be noted that the command "ON - 999 - ENTER" causes all of the cameras not having an address set to enter the dynamic addressing mode. Thus, it is not necessary all the time to use the "CAMERA - XXX - ENTER" command. However, it is preferred to use the "CAMERA - XXX - ENTER" command prior to sending the "ON - 999 - ENTER" command addressed to a particular camera. This will help the installer remember the logical camera number of the video being viewed. The logical camera number will eventually become the operation address.

The "ON - YYY - ENTER" command is used to enter the high order digits of the serial number of the camera to be addressed. For example, if the serial number of the camera to be addressed is "123,456", the user will enter "ON - 123 - ENTER". This would inform the appropriate camera to continue the dynamic addressing mode. All other cameras that do not use 123 as the high-order digits would drop out. In response to this command, the on-screen display would inform the user to use the "ON - ZZZ - ENTER" command to continue the dynamic addressing.

The "ON - 456 - ENTER" command is then used to enter the low order digits of the serial number of the camera to be addressed.

In the above example, the user will enter "ON - 456 - ENTER". This would inform the appropriate camera to continue the dynamic addressing. Since the unique serial number of the camera to be addressed has now been completely entered, the only camera that will still be active is the one to be addressed.

The screen would then inform the user to enter the "ON - 1 - ENTER" command to store the address. Upon entering this command, the camera will use the keyboard camera number (logical camera number) as its operational address. For example, if the keyboard camera number is "301", the camera's operational address would become "301" and thus only respond to commands addressed accordingly.

Another example of keyboard commands to implement the present invention is shown in Figure 5. As can be seen, these commands are the same as Figure 4, except that "ON - 999 - ENTER" has been replaced by "ON - 998 - ENTER". "ON - 998 -ENTER" causes all of the cameras in the system to enter the dynamic addressing mode, regardless of the pervious address status.

Another example of keyboard commands to implement the present invention is shown in Figure 6. As can be seen, these commands are the same as Figure 4, except that "ON - 1 - ENTER" has been replaced by "OFF - 1 - ENTER". Instead of causing the new address to be stored, the "OFF - 1 - ENTER" command will cause a previous stored address to be erased. If equipped with configuration switches, the camera than will use these switch settings as the operational address.

A further example of keyboard commands to implement the present invention is shown in Figure 7. The "ON - 997 - ENTER" command sent to any camera will cause all of the cameras on the communication line to momentarily display its address. This will be necessary if the camera is moved to another physical location and the dynamically assigned address is no longer valid. The user can call up the video for the new logical number, observe the camera's current address, send the "ON - 998 - ENTER" command addressed to the camera's current address and re-program the address as described above. The user will also have the ability to disable the dynamically assigned address prior to removal. That way sending "ON - 997 - ENTER" may not be necessary.

The foregoing description of the present invention has been presented for the purposes of illustration and description. It is not intended to limit the invention to the precise forms disclosed. Many modifications and variations are possible in light of the above teachings. Therefore, it is intended that the scope of the invention should not be limited by the detail description.

## Claims

1. A method for addressing cameras in a surveillance system comprising a plurality of cameras coupled to a controller by data lines, wherein the controller (2) performs the steps of:
selecting a camera to be addressed (28);
initiating a dynamic addressing mode in the selected camera and in the cameras of the surveillance system which do not have their addresses set by sending a signal to the cameras (30);
receiving from each cameras that require addressing a video including its unique identifier;
enabling the display of the unique identifier from each of the cameras (32);
entering via the controller the unique identifier associated with a camera (34);
transmitting a command including the unique identifier of the camera to be addressed;
and wherein the camera performs the step of:
storing (36) an address of the camera which was selected by entering its unique identifier or erasing (38) a previously stored address in a non-volatile random access memory (21) of the camera selected (38).

2. The method of claim 1, wherein each of the identifiers is stored in a read only memory of a camera (10).

3. The method of claim 1, wherein each of the identifiers is uniquely associated with one camera of the system (24).

4. The method of claim 1, wherein each of the identifiers is a serial number.

5. The method of claim 1, wherein the selecting the camera includes entering the logical number of the camera to be addressed.

6. A surveillance system, comprising: a controller (2) and a number of cameras (10) coupled to the controller (2), each including an unique identifier and having a dynamic addressing mode ;
the controller having means for (2) performing:
selecting a camera to be addressed;
initiating the dynamic addressing mode in the selected camera and in the cameras of the surveillance system which do not have their addresses set by sending a signal to the cameras;
receiving from each cameras that require addressing a video including its unique identifier;
enabling the display of the unique identifier from each of the cameras;
entering via the controller the unique identifier associated with a camera;
transmitting a command including the unique identifier of the camera to be addressed;
and wherein the camera having means for performing the step of:
storing an address of the camera which was selected by entering its unique identifier or erasing a previously stored address in a non-volatile random access memory (21) of the camera selected.

## Patentansprüche

1. Verfahren zum Adressieren von Kameras in einem Überwachungssystem, umfassend mehrere, durch Datenleitungen an einen Controller gekoppelte Kameras, wobei der Controller (2) die folgenden Schritte ausführt:
Wählen einer zu adressierenden Kamera (28);
Initiieren eines dynamischen Adressiermodus in der gewählten Kamera und in den Kameras des Überwachungssystems, deren Adressen nicht durch Senden eines Signals an die Kameras (30) gesetzt werden;
Empfangen von allen Kameras, die eine Adressierung erfordern, eines Videos mit ihrer eindeutigen Identifikation;
Ermöglichen der Anzeige der eindeutigen Identifikation von jeder der Kameras (32);
Eingeben der mit einer Kamera assoziierten eindeutigen Identifikation über den Controller (34);
Übertragen eines Befehls, der die eindeutige Identifikation der zu adressierenden Kamera enthält;
und wobei die Kamera die folgenden Schritte durchführt:
Speichern (36) einer Adresse der Kamera, die gewählt wurde, durch Eingeben ihrer eindeutigen Identifikation oder Löschen (38) einer zuvor gespeicherten Adresse in einem nichtflüchtigen Direktzugriffspeicher (21) der gewählten Kamera (38).

2. Verfahren nach Anspruch 1, wobei jede der Identifikationen in einem Festwertspeicher einer Kamera gespeichert wird (10).

3. Verfahren nach Anspruch 1, wobei jede der Identifikationen eindeutig mit einer Kamera des Systems assoziiert ist (24).

4. Verfahren nach Anspruch 1, wobei jede der Identifikationen eine serielle Nummer ist.

5. Verfahren nach Anspruch 1, wobei das Wählen der Kamera das Eingeben der logischen Nummer der zu adressierenden Kamera beinhaltet.

6. Überwachungssystem, umfassend: einen Controller (2) und eine Anzahl von Kameras (10), gekoppelt an den Controller (2), wobei jede eine eindeutige Identifikation enthält und einen dynamischen Adressiermodus aufweist;
wobei der Controller (2) Mittel aufweist zum Durchführen von:
Wählen einer zu adressierenden Kamera;
Initiieren des dynamischen Adressiermodus in der gewählten Kamera und in den Kameras des Überwachungssystems, deren Adressen nicht durch Senden eines Signals an die Kameras gesetzt werden;
Empfangen von allen Kameras, die eine Adressierung erfordern, eines Videos mit ihrer eindeutigen Identifikation;
Ermöglichen der Anzeige der eindeutigen Identifikation von jeder der Kameras;
Eingeben der mit einer Kamera assoziierten eindeutigen Identifikation über den Controller;
Übertragen eines Befehls, der die eindeutige Identifikation der zu adressierenden Kameras enthält;
und wobei die Kamera Mittel aufweist zum Durchführen des folgenden Schritts:
Speichern einer Adresse der Kamera, die gewählt wurde, durch Eingeben ihrer eindeutigen Identifikation oder Löschen einer zuvor gespeicherten Adresse in einem nichtflüchtigen Direktzugriffspeicher (21) der gewählten Kamera.

## Revendications

1. Procédé d'adressage de caméras dans un système de surveillance comprenant une pluralité de caméras reliées à une unité de commande par des lignes de données, dans lequel l'unité de commande (2) effectue les étapes consistant à :
sélectionner une caméra dont l'adressage (28) doit être effectué ;
déclencher un mode d'adressage dynamique dans la caméra sélectionnée et dans les caméras du système de surveillance dont les adresses ne sont pas définies par envoi d'un signal aux caméras (30) ;
recevoir de chaque caméra nécessitant un adressage une vidéo comportant son identifiant unique ;
permettre l'affichage de l'identifiant unique provenant de chacune des caméras (32) ;
introduire par l'intermédiaire de l'unité de commande l'identifiant unique associé à une caméra (34) ;
transmettre une commande contenant l'identifiant unique de la caméra dont l'adressage doit être effectué ;
et dans lequel la caméra effectue l'étape consistant à :
stocker (36) une adresse de la caméra qui a été sélectionnée en introduisant son identifiant unique ou en effaçant (38) une adresse précédemment stockée dans une mémoire vive non volatile (21) de la caméra sélectionnée (38).

2. Procédé selon la revendication 1, dans lequel chacun des identifiants est stocké dans une mémoire morte d'une caméra (10).

3. Procédé selon la revendication 1, dans lequel chacun des identifiants est associé de façon unique à une caméra du système (24).

4. Procédé selon la revendication 1, dans lequel chacun des identifiants est un numéro de série.

5. Procédé selon la revendication 1, dans lequel la sélection de la caméra consiste à introduire le numéro logique de la caméra dont l'adressage doit être effectué.

6. Système de surveillance, comprenant :
une unité de commande (2) et un certain nombre de caméras (10) reliées à l'unité de commande (2), comportant chacune un identifiant unique et ayant un mode d'adressage dynamique ;
l'unité de commande ayant un moyen (2) destiné à :
sélectionner une caméra dont l'adressage doit être effectué ;
déclencher le mode d'adressage dynamique dans la caméra sélectionnée et dans les caméras du système de surveillance dont les adresses ne sont pas définies par envoi d'un signal aux caméras ;
recevoir de chacune des caméras qui nécessitent un adressage, une vidéo contenant son identifiant unique ;
permettre l'affichage de l'identifiant unique en provenance de chacune des caméras ;
introduire par l'intermédiaire de l'unité de commande l'identifiant unique associé à une caméra ;
transmettre une commande contenant l'identifiant unique de la caméra dont l'adressage doit être effectué ;
et dans lequel la caméra comporte un moyen destiné à effectuer l'étape consistant à :
stocker une adresse de la caméra qui a été sélectionnée en introduisant son identifiant unique ou en effaçant une adresse précédemment stockée dans une mémoire vive non volatile (21) de la caméra sélectionnée.
